# FASCICULE DE BREVET EUROPEEN

(11) **EP 1 112 122 B1**
(45) Date de publication et mention de la délivrance du brevet: **04.12.2002**
(21) Numéro de dépôt: 99941720.7
(22) Date de dépôt: 08.09.1999
(51) Int. Cl.: B01L 3/00, F15C 3/00

(54) **SYSTEME MICROFLUIDIQUE DE REACTIONS ET DE TRANSFERT**
MIKROFLUIDISCHES REAKTIONS- UND TRANSFERSYSTEM
MICROFLUID SYSTEM FOR REACTIONS AND TRANSFERS

(30) Priorité: 08.09.1998 FR 9811383; 14.06.1999 FR 9907689
(43) Date de publication de la demande: 04.07.2001
(60) Demande divisionnaire: 01204802.1
(73) Titulaire: BIOMERIEUX, 69280 Marcy-L'Etoile (FR)
(72) Inventeur: COLIN, Bruno, F-69280 Marcy l'Etoile (FR); PARIS, Cécile, F-69280 Marcy l'Etoile (FR); DACHAUD, Jacques, F-25000 Besançon (FR); IMBAUD, Pierre, F-69480 Pommiers (FR)
(74) Mandataire: Guerre, Dominique
(86) Numéro de dépôt international: FR9902137
(87) Numéro de publication internationale: WO00013795

(56) Documents cités:
- EP-A- 0 875 291
- WO-A-97/27324
- US-A- 3 881 513
- US-A- 5 165 655
- US-A- 5 325 880
- US-A- 5 671 905
- US-A- 5 772 181
- SHOJI ET AL: "Prototype Miniature Blood gas analyzer fabricated on a Silicon wafer" SENSORS AND ACTUATORS, vol. 14, 24 octobre 1986 (1986-10-24) - 24 septembre 1987 (1987-09-24), pages 101-107, XP002101654

## Description

La présente invention concerne un dispositif ou consommable, par exemple constitué par une carte, permettant de conduire une réaction ou au moins deux réactions parallèlement en son sein, qui est constituée par une surface supérieure et une surface inférieure reliées l'une à l'autre par un bord. Chacune des réactions, isolées physiquement l'une de l'autre, s'effectue dans au moins un canal indépendant dans lequel un flux fluidique peut être généré par des moyens de transfert.

L'invention concerne également un système de transfert d'un flux fluidique entre deux dispositifs ou cartes, ainsi qu'un procédé de transfert d'un tel flux fluidique entre deux dispositifs ou cartes, telles que décrites ci-dessus.

*L'état de la technique est constitué par le document US-A-4*,*106*,*675 qui propose un appareil de prélèvement d'un liquide ayant une section tubulaire constitué d'un matériau flexible, dans lequel le passage du liquide est possible*. *L'appareil possède également un moyen de contrôle du flux liquide constitué d'une soupape rigide positionnée dans le tube flexible. Ce tube est soudé sur le moyen de contrôle en position aval et épouse la forme dudit moyen en position amont*. *Lorsqu*'*un flux de liquide arrive sur le moyen de contrôle*, *il ne peut pas continuer son transit via ledit tube. De ce fait*, *le liquide va s'accumuler au niveau de la soudure, permettant le gonflement en amont du tube flexible, ce qui libère ainsi une ouverture latérale dudit moyen de contrôle par lequel le liquide peut poursuivre son transit*.

L'utilisation de tels dispositifs nécessite de créer une surpression au niveau du moyen de contrôle. Ceci rend la combinaison de plusieurs moyens de contrôle de ce type sur une seule carte impossible, sans le concours d'autres éléments d'ouverture et/ou de fermeture contrôlées des canaux.

*Le document US-A-4*,*585*,*623 a pour objet un appareil pour réaliser rapidement à un endroit unique des essais chimiques ou immunochimiques*. *Cet appareil comporte un corps en plastique moulé pouvant être miniaturisé*, *et présentant plusieurs tubes contenant des réactifs*, *un tube contenant l'échantillon et un tube de* *plus petite taille recevant la réaction. Chaque tube étant associé à un piston*, *il est possible d'insérer l'appareil dans un automate programmable.*

Cet appareil est relativement volumineux même si la miniaturisation est possible, car il faut prévoir la position dudit appareil ainsi que des différentes bielles qui vont permettre d'actionner les pistons. De plus, il n'est possible d'effectuer qu'une seule réaction avec un tel appareil; si plusieurs réactions doivent être réalisées, il faudra prévoir plusieurs appareils et également du temps pour charger ceux-ci avec les réactifs et échantillons adéquats.

*Le document WO-A-97*/*27324 concerne une cassette pour conduire en parallèle des réactions qui comporte une ouverture d'entrée et une ouverture de sortie pour le transfert du ou des échantillons à introduire dans la cassette*. *Certaines zones de la cassette sont de construction particulière (chambre de Bursapak, soupape à piston*, *valve à bille), elles permettent, sous l'action d'une force extérieure continue*, *de maintenir un canal fermé*. *Il s'agit de vannes qui sont constituées de deux parties* ; *il y a tout d'abord un film qui a une forme particulière et qui peut être déformé, et ensuite un plongeur pour fermer ou ouvrir la vanne par déformation du film.*

Toutefois, cette construction comporte de nombreux inconvénients. Les deux inconvénients principaux résident, d'une part, dans les risques de contamination interne de la cassette du fait que celle-ci est stockée avant son utilisation à la pression atmosphérique, et d'autre part, dans les moyens qui actionnent la cassette, au niveau des chambres de Bursapak, qui sont constituées par des soupapes à piston et des valves à bille, dont la présence est nécessaire, dans le temps et en intensité, pour maintenir les canaux concernés en position fermée. Or ces moyens d'actionnement ne font pas partie intégrante de ladite cassette, ils sont rapportés et non solidaires de la cassette et sont donc situés au niveau d'un appareil permettant de diriger les réactions au sein de la cassette. Cette contamination et/ou le non-maintien en position fermée desdits canaux peuvent entraîner des erreurs ultérieures lors de l'utilisation de la cassette. Ledit maintien en position fermée nécessite un appareillage lourd et onéreux qui rend le coût d'utilisation de telles cassettes prohibitif. Enfin, la forme très particulière du film entraîne des surcoûts de fabrication et de conditionnement.

*L 'article de Shoji et al. « Prototype Miniature Blood gas analyser fabricated on a silicon wafer »*, *publié dans SENSORS AND ACTUATORS (vol*. *14*, *24 octobre 1986 - 24 septembre 1987, pages 101-107)*, *référence XP002101654, traite d'un petit appareil pour calculer le pH du sang. Essentiellement, cet appareil est équipé de micro-vannes. Il y a un premier et un second moyens constituant la vanne. Il s'agit d'un film et d'un cylindre de verre qui sont solidaires de l'appareil. La mise en action du cylindre de verre s'effectue par un ressort en alliage à mémoire de forme, qu'il est nécessaire d'actionner de l'extérieur par un courant électrique.*

Il y a donc nécessité de conserver l'alimentation électrique si l'on désire maintenir la micro-vanne dans sa position ouverte ou fermée. Avec l'invention de la demanderesse, une fois que l'actionneur extérieur a agi sur la vanne, l'actionneur n'est généralement plus utile.

*Le document US-A-3*,*881*,*513 propose un distributeur de liquides dans de nombreux canaux*. *Ce distributeur contient des sièges de vanne au niveau de chacun desquels est présent une bille. Cette bille*, *associée à la forme tronconique du siège auquel elle. est associée, permet ou empêche le passage d'un fluide selon la direction de ce fluide.*

Il n'y a donc pas d'actionneur à proprement parler pour ce type de vanne à bille, qui joue plutôt le rôle d'une diode fluidique. La vanne, selon l'invention de la demanderesse, possède un actionneur constituant la vanne, solidaire du dispositif et qui active ou non la fermeture de ladite vanne en fonction de sa position.

*Le document EP-A-0*.*875*.*291 concerne une barrette contenant un certain nombre de cuvettes associées de façon linéaire*. *De toute ces cuvettes, les deux premières sont les plus intéressantes*. *Chaque chambre contient des réactifs utiles à une technique d'amplification*, *telle que la TMA*. *Un canal relie les deux cuvettes et comprend une vanne*. *Le mode de réalisation le plus intéressant consiste en un canal flexible comprenant une vanne constituée d'une bille scellée. Le déblocage de cette vanne peut être ainsi décrit par l'action de deux bras qui permettent la déformation du canal flexible et donc le déplacement de la bille vers un endroit où ledit canal est d'un diamètre plus important où la bille ne ferme plus ledit canal*.

Contrairement à cette invention, les vannes du dispositif selon l'invention sont actionnables une multitude de fois, car leur position ouverte ou fermée est réversible.

Conformément à la présente invention, le dispositif proposé solutionne l'ensemble des problèmes ci-dessus énumérés en proposant un consommable fiable et peu onéreux à mettre en oeuvre. Ainsi, les vannes sont entièrement solidaires du dispositif et l'activation ou la désactivation de celles-ci n'entraînent qu'une action ponctuelle ou très limitée dans le temps d'un actionneur extérieur. De plus, ces vannes sont actionnables de nombreuses fois.

A cet effet, la présente invention concerne un dispositif, permettant de conduire une réaction ou au moins deux réactions en parallèle ou en série en son sein, qui est constitué par :
- une surface supérieure et une surface inférieure reliées l'une à l'autre par un bord,
- au moins un canal dans lequel un flux fluidique peut être créé par des moyens de transfert pour permettre le transfert d'au moins un échantillon à traiter et/ou à analyser, et
- au moins une vanne incorporée à chaque canal permettant l'orientation de chaque échantillon et donc le contrôle des transferts, des réactions et des analyses dans le dispositif,
caractérisé par le fait que chaque vanne est constituée de deux moyens solidaires du dispositif, le premier moyen étant mobile entre une position de repos où le transfert de fluide est possible et une position active où ledit transfert est impossible, et le second moyen étant mobile entre une position de repos où il n'est pas en contact avec ledit premier moyen et une position active où il déforme le premier moyen, pour que le transfert soit impossible, et que ledit second moyen est activé par un actionneur extérieur au dispositif, qui agit ponctuellement et uniquement lors du déplacement du second moyen de sa position de repos vers sa position active et inversement.

Les premier et second moyens sont positionnés au niveau d'une des surfaces du dispositif où le canal concerné est affleurant.

Plus précisément, les premier et second moyens sont positionnés dans le prolongement longitudinal de l'orifice de la partie du canal situé en amont ou en aval de la vanne.

D'autre part, le second moyen est mobile entre deux positions, une première position de repos où le transfert d'un fluide est possible, et une seconde position déformée et stable où il vient compresser le premier moyen au niveau du canal afin de le fermer.

Dans un mode particulièrement intéressant de réalisation, le premier moyen, qui peut être déformé, est constitué par un film flexible, tel que de l'élastomère, recouvrant en tout ou partie la surface supérieure ou la surface inférieure du dispositif.

Dans un mode également particulièrement intéressant de réalisation et adapté au mode de réalisation précédent du premier moyen qui peut être déformé, le second moyen actionneur est constitué par un ergot mobile ayant un piston pour appuyer sur le premier moyen et par une surface biseautée associée à un épaulement pour maintenir en position déformée l'ergot mobile.

Quel que soit le mode de réalisation, le second moyen est monobloc et actionnable de l'extérieur du dispositif.

Selon une variante de réalisation, le premier moyen, qui peut entraîner la fermeture indirectement du canal, est associé à une bille située dans le canal.

De plus, la bille est maintenue en position dans le canal par l'intermédiaire d'un dégagement situé dans le prolongement longitudinal de l'orifice de la partie dudit canal situé en amont ou en aval de la vanne.

La bille a un diamètre sensiblement identique mais inférieur au diamètre intérieur du canal, de sorte que ladite bille se coince dans ledit canal lorsque le premier moyen est dans la seconde position déformée, où le transfert du fluide est impossible.

Selon un mode particulièrement intéressant de réalisation, le second moyen de la vanne est constitué par deux bras reliés l'un à l'autre par un bras de liaison qui créent une agrafe en forme sensiblement de U, dont la gorge reçoit la carte.

Selon ce mode de réalisation, cette agrafe comporte un moyen d'actionnement de ladite agrafe.

Toujours selon ce mode de réalisation, ladite agrafe, mobile de manière réversible entre deux positions, une première position de repos où le transfert d'un fluide est possible, et une seconde position déformée et stable où il vient compresser le premier moyen au niveau du canal afin de le fermer, coopère avec des moyens de positionnement dans ses deux positions extrêmes.

Le réseau de canaux est en dépression par rapport à l'environnement où est placé le dispositif, ce qui permet le transfert, au sein dudit réseau, d'au moins un échantillon à traiter et/ou à analyser par une ouverture d'entrée du dispositif, et chaque vanne incorporée audit dispositif permettant l'orientation de chaque échantillon transféré et donc le contrôle des réactions dans le dispositif.

Préférentiellement, lorsque le dispositif comporte au moins trois vannes, la distance séparant deux vannes adjacentes est constante et préférentiellement comprise entre 1 et 5 mm.

La présente invention concerne également un premier système de transfert d'un flux fluidique entre deux dispositifs, tels que décrits ci-dessus, qui est constitué par :
- un canal de transfert pour chaque dispositif constitué de deux portions, à savoir une première portion de grand diamètre, qui n'est pas en contact avec l'extérieur dudit dispositif et une seconde portion de petit diamètre, qui est en contact avec l'extérieur,
- une bille située dans la portion de petit diamètre de chaque canal de transfert, et
- un tube pouvant relier les portions de petit diamètre de deux dispositifs.

La présente invention concerne également un second système de transfert d'un flux fluidique entre deux dispositifs, tels que décrits ci-dessus, qui est constitué par :
- un canal traversant pour chaque dispositif constitué de deux portions, à savoir une première portion de grand diamètre, qui n'est pas en contact avec le canal en contact avec l'ouverture de sortie et donc avec l'extérieur dudit dispositif et une seconde portion de petit diamètre, qui est en contact avec ladite ouverture et donc avec l'extérieur,
- une bille située dans la portion de petit diamètre de chaque canal traversant, et
- un tube pouvant relier les portions de petit diamètre de deux dispositifs.

Quel que soit le système utilisé, le petit diamètre de chaque canal de transfert ou traversant est sensiblement identique ou inférieur au diamètre de chaque bille et au diamètre extérieur du tube, afin de créer une étanchéité avec l'extérieur de chaque dispositif individuel ou de deux dispositifs associés par le système de transfert.

Enfin la présente invention concerne un procédé de transfert d'un flux fluidique entre deux dispositifs, tels que décrits, utilisant un système, tel que décrit ci-dessus, qui consiste à :
- positionner chaque extrémité libre du tube au niveau de la seconde portion de petit diamètre du canal de transfert à l'encontre de la bille de chaque dispositif,
- rapprocher les deux dispositifs selon l'axe dudit tube, de sorte que le tube déplace chaque bille de la seconde portion de petit diamètre dudit canal de transfert ou traversant vers la première portion de grand diamètre du canal.

Les figures ci-jointes sont données à titre d'exemple explicatif et n'ont aucun caractère limitatif. Elles permettront de mieux comprendre l'invention.

La figure 1 représente une vue de dessus d'un dispositif selon la présente invention.

La figure 2 représente une vue en coupe selon A-A de la figure 1 d'un premier mode de réalisation de l'invention, lorsque le premier moyen, qui peut être déformé, et le second moyen actionneur sont en position de repos où le transfert d'un fluide est possible.

La figure 3 représente une vue en coupe selon B-B de la figure 1, lorsque le premier moyen est en position déformée sous l'action du second moyen où le transfert du fluide est impossible.

La figure 4 représente une vue en coupe d'un deuxième mode de réalisation de l'invention, lorsque le premier moyen, qui peut être déformé, est en position de repos où le transfert d'un fluide est impossible.

La figure 5 représente une vue en coupe identique à la figure 4, lorsque le premier moyen est en position partiellement déformée sous l'action du second moyen où le transfert du fluide reste impossible.

La figure 6 représente une vue en coupe identique aux figures 4 et 5, lorsque le premier moyen, qui peut être déformé, et le second moyen actionneur sont en position de repos où le transfert d'un fluide est possible.

La figure 7 représente une vue en coupe identique aux figures 4 à 6, lorsque un troisième moyen est en position déformée sous l'action du quatrième moyen où le transfert du fluide redevient impossible. Il est à noter que le premier et le troisième moyens, d'une part, et le deuxième et le quatrième moyen, d'autre part, sont des équivalents techniques.

La figure 8 représente une vue schématique de deux dispositifs ou cartes telles que celles décrites aux figures précédentes, permettant la mise en oeuvre d'un système de transfert, selon la présente invention.

La figure 9 représente une vue identique à la figure 8, mais dans laquelle le tube pouvant relier les deux cartes est mis en place.

La figure 10 représente une vue identique à la figure 9, où les deux cartes sont rapprochées l'une de l'autre pour permettre le transfert.

La figure 11 représente une vue identique aux figures 9 et 10, après que le transfert ait été exécuté et les deux cartes à nouveau séparés.

La figure 12 représente une vue schématique d'une vanne en position fermée.

La figure 13 représente une vue schématique d'une vanne en position ouverte.

La figure 14 représente une vue en coupe selon C-C de la vanne présentée en figure 12.

La figure 15 représente une vue en coupe selon D-D de la vanne présentée en figure 13.

La figure 16 représente une vue en coupe identique à celle de la figure 15 selon un second mode de réalisation.

La figure 17 représente une vue en coupe d'un second mode de réalisation de deux dispositifs ou cartes telles que celles décrites aux figures précédentes, permettant la mise en oeuvre d'un système de transfert, selon la présente invention.

La figure 18 représente une vue en perspective d'une agrafe faisant office de second moyen d'actionnement selon un autre mode de réalisation de la présente invention.

La figure 19 représente une vue en perspective d'une carte d'analyse comportant un réseau de canaux dans lequel les fluides sont dirigés par l'intermédiaire de vannes équipées d'agrafes selon la figure 18.

La figure 20 représente une vue en coupe selon E-E de la figure 19, où l'agrafe ferme la vanne.

La figure 21 est identique à la figure 20, mais l'agrafe laisse la vanne ouverte.

La figure 22 représente une vue en élévation de la figure 19, dans laquelle deux des trois vannes représentées sont ouvertes.

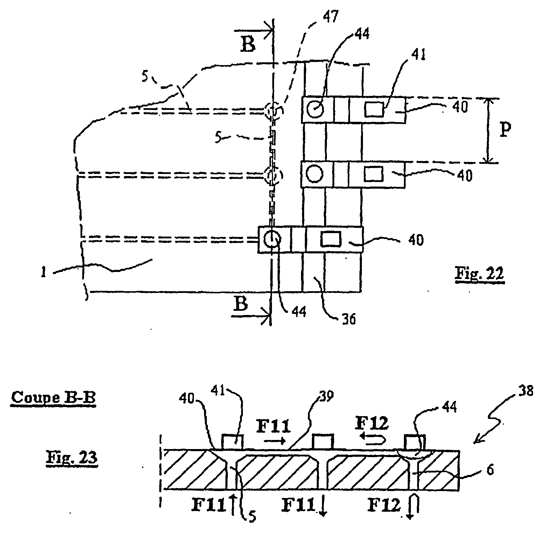

Enfin, la figure 23 représente une vue en coupe selon F-F de la figure 22.

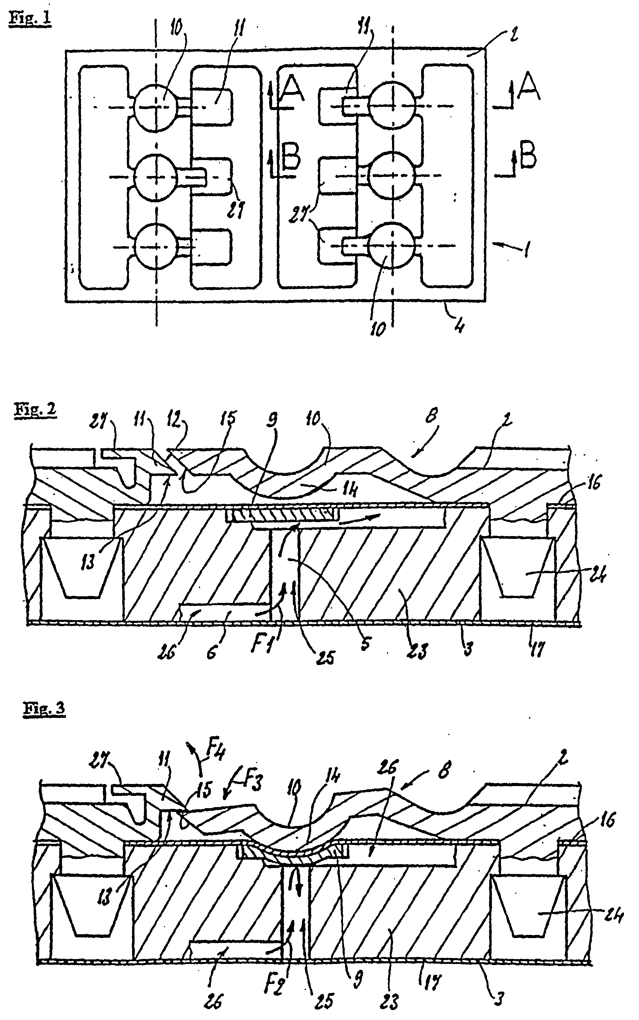

La présente invention concerne un dispositif 1 constitué par une carte 1, essentiellement représentée sur la figure 1. Cette carte 1 est constituée par une surface supérieure 2, bien visible sur cette figure, et une surface inférieure 3 mieux représentée sur les figures 2 et 3. Entre ces deux surfaces 2 et 3, un rebord 4 est présent qui relie lesdites surfaces 2 et 3. Cet ensemble constituant la carte 1 est pour l'essentiel constitué par un corps 23 situé en position sous-jacente, comme on le voit bien sur les représentations en coupe des figures 2 et 3, c'est-à-dire que le corps 23 constitue la surface inférieure 3 et une partie du rebord 4.

Ledit corps 23 est parcouru de trous traversants 25 et de rainures 26 qui constituent ensemble un réseau de canaux 5. Sur la surface supérieure 2, est présent un film supérieur 16 alors que sur la surface inférieure 3 est présent un film inférieur 17. Bien entendu, cette disposition n'est pas obligatoire. De plus, les films 16 et 17 peuvent être transparents ou opaques, par exemple en feuille d'aluminium. Quel que soit le mode de réalisation, lesdits films 16 et 17 sont collés ou soudés sur le dispositif par tout mode de fixation.

Le réseau de canaux 5 permet le déplacement d'un échantillon ou de tout fluide qu'il soit gazeux ou liquide, référencé 6 sur les figures. L'échantillon va donc parcourir les canaux 5 et, selon l'ouverture ou la fermeture de vannes 8 ou 18, incorporées à la carte 1, prendre une orientation ou une autre en fonction des canaux libres ou ouverts se présentant à lui.

Ainsi, selon le mode de réalisation des figures 2 et 3, où une vanne 8 en coupe longitudinale est représentée, le fluide pourra passer la vanne 8 via le canal 5 en suivant le parcours indiqué par les flèches selon F1 de la figure 2. Selon la figure 3, la vanne 8 étant fermée, le fluide 6 sera refoulé selon F2 et sera maintenu en position au niveau du trou traversant 25. Bien entendu, le fluide 6 présent au niveau de cette figure 3 peut être dirigé dans un autre canal 5 dont la vanne 8 est ouverte.

La vanne 8 est essentiellement constituée d'un élément monobloc rapporté sur le corps 23 de la carte 1 par l'intermédiaire de moyens de fixation 24. Ladite vanne 8 monobloc présente en fait deux moyens.

Un premier moyen 9, qui peut être déformé, est constitué par un film flexible par exemple en élastomère. Ce premier moyen 9 peut être présent sur toute ou partie de la surface supérieure 2. Ainsi, le moyen 9 peut être constitué par une simple pastille élastique, comme cela est représenté sur les figures 2 et 3.

Le second moyen 10 fait office d'actionneur du premier moyen 9. Cet actionneur 10 est également constitué de deux parties. Il y a tout d'abord situé à gauche des figures 2 et 3, un ergot mobile 11 qui peut être basculé selon F4. D'autre part, coopérant avec l'ergot 11, un piston 14 est présent, également monté basculant, selon F3. En fait, et comme on le voit bien sur les figures, l'ergot 11 et le piston 14 comportent chacun une surface biseautée respectivement référencée 12 et 15 qui permet lorsqu'un enfoncement est effectué selon F3 du piston 14 d'avoir un basculement selon F4 de l'ergot 11. Lorsque le piston 14 esquive complètement la surface biseautée 12, ledit piston 14 vient reposer contre un épaulement 13 de l'ergot 11. Dans cette position représentée à la figure 3, la vanne 8 est en position de fermeture du canal 5 de manière stable et sans intervention de l'extérieur puisque ladite vanne 8 est bloquée. Cette caractéristique est tout à fait intéressante puisqu'elle démontre qu'il est possible d'avoir sur une seule carte un certain nombre de vannes qui, une fois actionné par un manipulateur ou par un automate, permet une fermeture stable de la vanne 8.

Bien entendu, l'action inverse est tout à fait possible. Dans ce cas, il est nécessaire d'agir sur la languette 27, située sur l'ergot 11, et de répéter le basculement selon F4 pour débloquer le piston 14 et ainsi ouvrir à nouveau la vanne 8. Contrairement aux vannes de l'état de la technique qui nécessitent une intervention extérieure et continue tant que l'on veut avoir une fermeture de la vanne, celle-ci 8 permet une fois qu'une pression a été exercée sur le piston 14 de ne plus avoir à exercer de pression sur ladite vanne 8 pour conserver la position bloquée.

Selon ce mode de réalisation et comme cela a été déjà décrit, l'ensemble constitué par l'ergot 11 et le piston 14 est monobloc et est rapporté sur le corps 23. Néanmoins, il est tout à fait possible d'envisager que l'ergot 11 et le piston 14 ne soient pas monoblocs et soient tous les deux associés séparément sur le reste de ladite carte 1. De la même façon, il est tout à fait imaginable que l'ergot 11 et le piston 14 soient monoblocs avec le reste du corps 23.

On comprend donc bien l'intérêt d'avoir un film supérieur 16 et/ou inférieur 17 qui soient souples pour coopérer et épouser l'enfoncement dû au piston 14 du premier moyen 9, qui peut être déformé. Néanmoins, il est tout à fait envisageable que le simple film soit flexible et capable à lui tout seul de créer l'étanchéité nécessaire à la vanne 8. Dans ce cas, le premier moyen 9 pourra être constitué par le film supérieur 16.

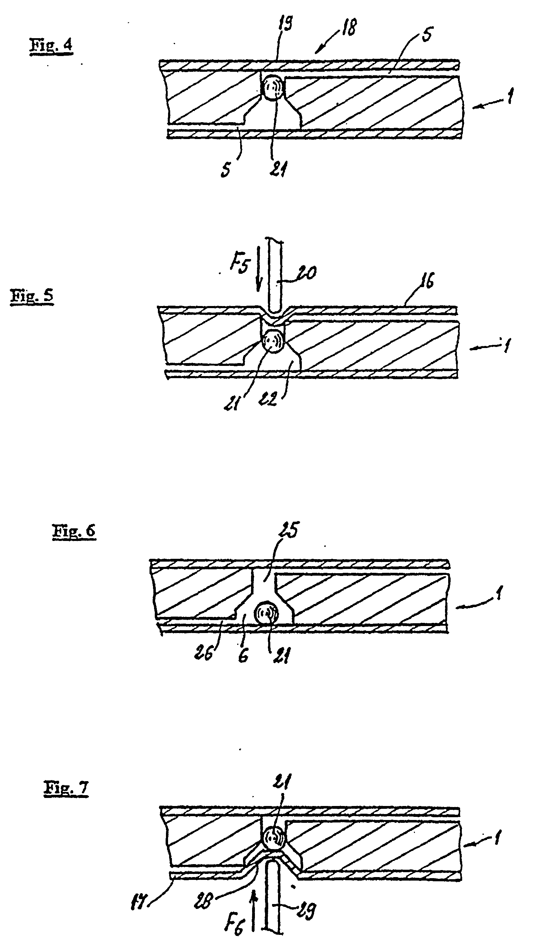

Selon un second mode de réalisation représenté sur les figures 4 à 7, la vanne 18 peut fonctionner selon un mode légèrement différent. Ainsi, les canaux 5 sont toujours constitués des trous traversants 25 et des rainures 26. Dans ce mode de réalisation particulier, le trou traversant 25 est en forme tronconique sur une partie de sa longueur. Cette forme tronconique fait office de dégagement 22 pour une bille 21 située en son sein.

Dans le mode de réalisation représenté sur les figures, le dégagement 22 a donc un diamètre supérieur et un diamètre inférieur du fait de sa forme tronconique. Le petit diamètre est en fait sensiblement identique ou inférieur au diamètre extérieur de la bille 21. De ce fait et comme on le voit bien sur la figure 4, la bille 21 peut venir épouser la forme de la partie du canal 5 de petit diamètre. Dans cette position, le canal 5 est bouché et le fluide 6 ne peut transiter.

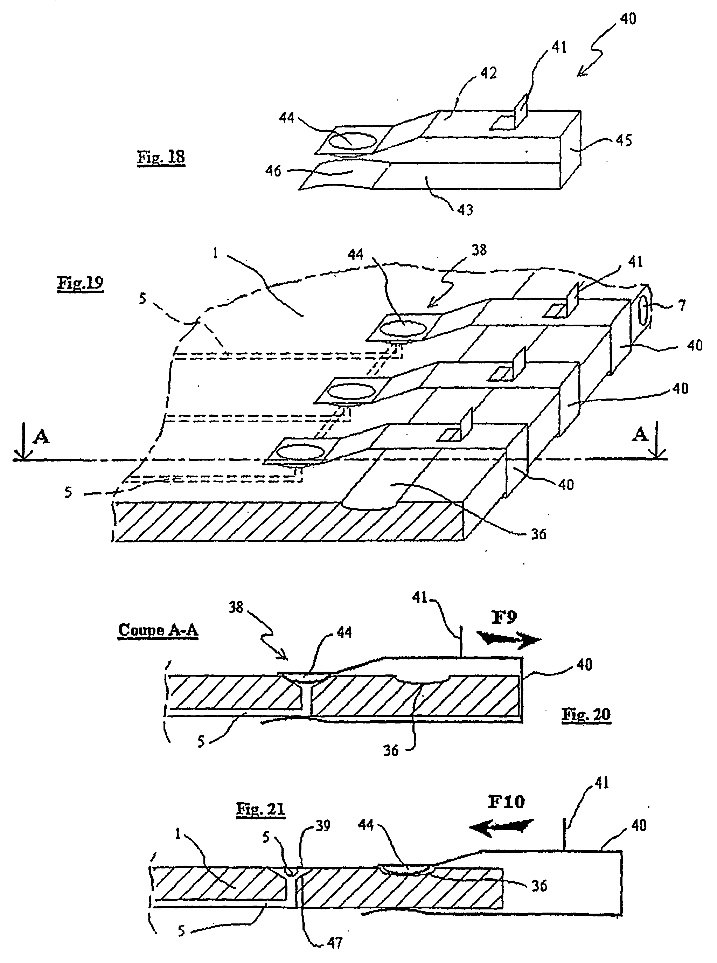

Si le diamètre de la bille 21 est légèrement supérieur, le matériau constituant le corps 23 de la carte 1 est en un matériau qui se déforme sous la pression de ladite bille 21 et génère une étanchéité, c'est-à-dire que la bille 21 est maintenue en position stable dans un canal circulaire par serrage sur la totalité de sa circonférence, figure 14.

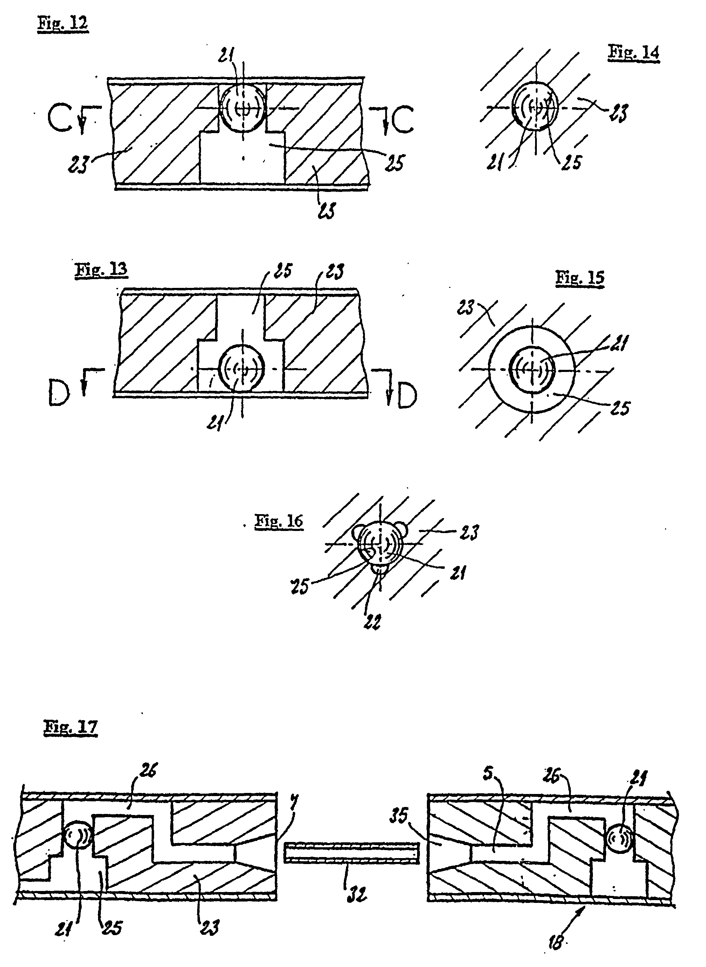

Cette situation définit la position « vanne fermée », figure 12.

Afin de débloquer la situation et d'ouvrir la vanne 18, celle-ci 18 comporte à l'instar de la vanne 8 précédente un premier moyen 19 qui peut être déformé et qui est constitué sur les figures par un film supérieur souple. Au niveau du trou traversant 25 où est présent la bille 21, un second moyen 20 de la vanne 18, qui fait office d'actionneur, vient, d'une part, agir selon F5 sur le premier moyen 19 et, d'autre part, permettre l'évacuation de la bille 21 dans l'espace du canal 5 qui possède un diamètre plus important. De ce fait et comme cela est représenté à la figure 6, il sera possible pour le fluide 6 de transiter dans le canal 5.

En fait, la bille 21 est déplacée axialement dans un logement de plus grand diamètre, figure 15, ou de même diamètre mais ayant des dégagements 22, figure 16. Le jeu entre canal 5 et bille 21 est alors suffisant pour permettre le passage de fluide 6.

Cette situation définit la position « vanne ouverte », figure 13.

Pour permettre le mouvement inverse, c'est-à-dire le mouvement de fermeture de la vanne 18, comme cela est représenté à la figure 7, il est possible d'avoir un mécanisme identique à celui représenté à la figure 5. Néanmoins celui-ci est utilisé sur l'autre face de ladite carte 1. Ce déplacement de la bille 21 s'effectue par un outillage externe ou non à la carte via la souplesse de film supérieur 7, qui constitue un troisième moyen 28 pouvant être déformé. Ce troisième moyen 28 coopère avec un quatrième moyen 29, qui fait office d'actionneur selon F6, et qui permet le positionnement à nouveau de la bille 21 au sein du canal 5, au niveau de son diamètre de petite dimension. Ceci rétablit la fermeture de ladite vanne 18 comme cela était représentée sur la figure 4.

Un autre mode de réalisation du second moyen constituant une vanne et pouvant déformer un film flexible 39 de structure semblable à celui référencé préalablement 16 ou 17, est représenté sur les figures 18 à 23. Ce mode de réalisation est constitué par des agrafes.

Selon le mode de réalisation représenté à la figure 18, ce second moyen 40 est constitué par une agrafe qui fait office d'actionneur. Cette agrafe 40 est essentiellement constituée de deux bras parallèles sensiblement l'un à l'autre, un premier bras 42 en position supérieure et un second bras 43 en position inférieure sur cette figure. Les deux bras 42 et 43 sont reliés par l'une de leurs extrémités, l'un à l'autre, par un bras de liaison 45 qui est sensiblement perpendiculaire aux deux bras précités 42 et 43. L'extrémité libre et terminale des deux bras 42 et 43 est particulièrement adaptée au maintien en position de l'agrafe 40 sur la carte 1, puisque le premier bras 42 comporte un piston 44 et que le second bras 43 comporte un bossage d'appui 46. La distance séparant le piston 44 du bossage 46 est plus faible que la distance séparant les deux bras 42 et 43 au niveau du bras de liaison 45.

Comme on le remarque sur les figures 19 à 23, les agrafes 40 reçoivent en leur sein, la carte 1. De ce fait, la largeur de cette carte 1 est supérieure à l'écartement entre le piston 44 et le bossage d'appui 46 mais inférieure à la distance séparant les deux bras 42 et 43 au niveau du bras de liaison 45. L'agrafe est donc maintenue en position par l'élasticité du matériau constituant ladite agrafe 40, un tel matériau pouvant être constitué d'un métal ou d'un plastique.

Sur les figures 20 et 21, l'agrafe 40 est mobile entre deux positions, une position active où le piston 44 vient fermer la vanne 38 telle que représentée à la figure 20 et une position de repos où l'agrafe n'agit pas sur ladite vanne 38. Il est possible de passer de la position active à la position de repos selon F9 de la figure 20, et de la position de repos à la position active selon F10 de la figure 21. Pour ce faire, le premier bras 42 comporte une petite découpe en forme de U et un pliage de la partie interne de cette découpe afin de former un ergot d'actionnement 41 qui a une position sensiblement perpendiculaire au plan formé par le premier bras 42. Cet ergot 41 va pouvoir coopérer avec des moyens d'actionnement connus de tout homme du métier, comme par exemple des électro-aimants ou des systèmes de bielles ou de cames, permettant d'obtenir un mouvement de va-et-vient selon F9 et F10.

Si l'on se reporte maintenant aux figures 20 et 21 uniquement, on comprend mieux le mode de fonctionnement de la vanne 38. Cette vanne 38 est constituée par un canal 5 qui traverse la carte 1 mais dont la forme est évasée et constitue un siège 47 de ladite vanne 38 sur la partie supérieure de la carte 1, selon la représentation qui en est faite sur les figures. Au niveau de ce siège 47, est présent un autre canal longitudinal 5, en position perpendiculaire au précédent canal 5, dont on ne voit que la forme semi-circulaire sur la figure 21. Lorsque le piston 44 vient compresser le film flexible 39 au niveau du siège 47, on comprend aisément que le piston 44 empêche tout transfert de fluide 6 provenant des canaux 5. C'est d'ailleurs ce qui est bien représenté sur la figure 23 où le fluide 6 s'écoule aisément selon F11 et est refoulé selon F12 au niveau de la seule et unique vanne 38 fermée, c'est-à-dire la vanne située à droite de cette figure. Pour les autres positions, les agrafes 40 sont en position ouvertes si l'on se réfère également à la figure 22.

En fait en position de repos, l'agrafe 40 est en position décalée par rapport à la vanne 38, le piston 44 vient alors épouser la forme d'une rainure semi-circulaire 36 qui assure une position de repos stable à ladite agrafe 40.

Sur les figures 22 et 23, on comprend d'ailleurs qu'il y a deux canaux 5 d'arrivée situés de part et d'autre d'un canal 5 de départ aisé à visualiser en fonction des flèches F11 et F12. Les deux vannes 38 latérales permettent de commander l'arrivée ou non d'un fluide 6 contenu dans chacun de ces canaux 5 latéraux, alors que la vanne 38 centrale permet de commander ou non l'évacuation du mélange ou d'un des fluides 6 qui a été introduit et qui transite.

Sur les figures 19 et 22, les agrafes 40 sont espacées régulièrement les unes des autres. Il existe donc un pas entre deux agrafes adjacentes. Préférentiellement, ce pas peut reprendre des valeurs utilisées dans le domaine de l'électronique, c'est-à-dire 3,96 mm, 2,54 mm ou 1,28 mm. L'avantage de cette construction réside dans le fait que les actionneurs reprennent également ce pas, ce qui constitue un gage de fiabilité, de compétitivité et de flexibilité pour les appareils d'analyse ainsi équipés. De plus, les agrafes peuvent avantageusement être guidées dans une rainure pratiquée sur la surface inférieure de la carte garantissant ainsi un positionnement relatif précis entre le canal (5) et le piston (44).

Bien entendu, ces modes de réalisation ne sont pas limitatifs et il est tout à fait imaginable que les positions de repos et active soient inversées sur la carte c'est-à-dire qu'il faille pousser pour désactiver une vanne si l'on se réfère au dernier mode de réalisation.

Selon un mode particulier de réalisation non représenté sur les figures, la carte 1 comporte des cloisons de séparation entre les agrafes 40, dont les dimensions peuvent par exemple correspondre à la forme de chaque agrafe 40, lors de ses déplacements selon F9 et F10. De telles cloisons ne sont pas représentées sur ces figures.

Pour résumer, six modes de réalisation de vannes sont décrits et représentés sur les figures.

Le premier mode de réalisation de la vanne 8 correspond aux figures 1 à 3, où le premier moyen est constitué par le film flexible 9 et où le second moyen est constitué par une languette flexible 10 individuelle faisant office d'actionneur, portée par la carte 1.

Le deuxième mode de réalisation de la vanne 18 correspond aux figures 4 à 7, où le premier moyen est constitué par le film flexible 19 et où le second moyen est constitué par un actionneur 20 extérieur, l'action de cet actionneur 20 étant maintenue au sein de ladite vanne 18 par l'intermédiaire d'une bille 21, il s'agit de la seule fermeture indirecte de vanne décrite et représentée sur ces figures.

Le troisième mode de réalisation de la vanne 38 correspond aux figures 18 à 23, où le premier moyen est constitué par le film flexible 39 et où le second moyen est constitué par une agrafe rapportée 40 mais dont l'action au niveau de ladite vanne 38 est constante selon la position de l'agrafe 40 par rapport au dispositif ou à la carte 1. Cette agrafe 40 est mue (F9 et F10) par un actionneur non représenté sur les figures, mais la position de ladite agrafe 40 est stable après chaque intervention de cet actionneur.

Le principe de la deuxième vanne 18 a été repris pour permettre le transit de fluide 6 entre deux dispositifs ou cartes 1 de structures identiques ou différentes. Ainsi, il est bien compréhensible que toute carte 1, quelques soient les vannes 8 et/ou 18 qui la constituent, nécessite d'avoir une ouverture d'entrée 7 pour le fluide ou échantillon 6. Ainsi, cette ouverture 7 est constituée pour chaque carte 1 par un canal 30 qui a une structure sensiblement identique au canal traversant 25 représenté sur les figures 4 à 7.

Ce canal 30 comporte une première partie de petit diamètre, située au plus près de l'ouverture 7, et une seconde partie de grand diamètre, située au sein de ladite carte 1. En fait, le petit diamètre du canal 30 est sensiblement identique ou inférieur au diamètre extérieur d'une bille 31 présente en son sein.

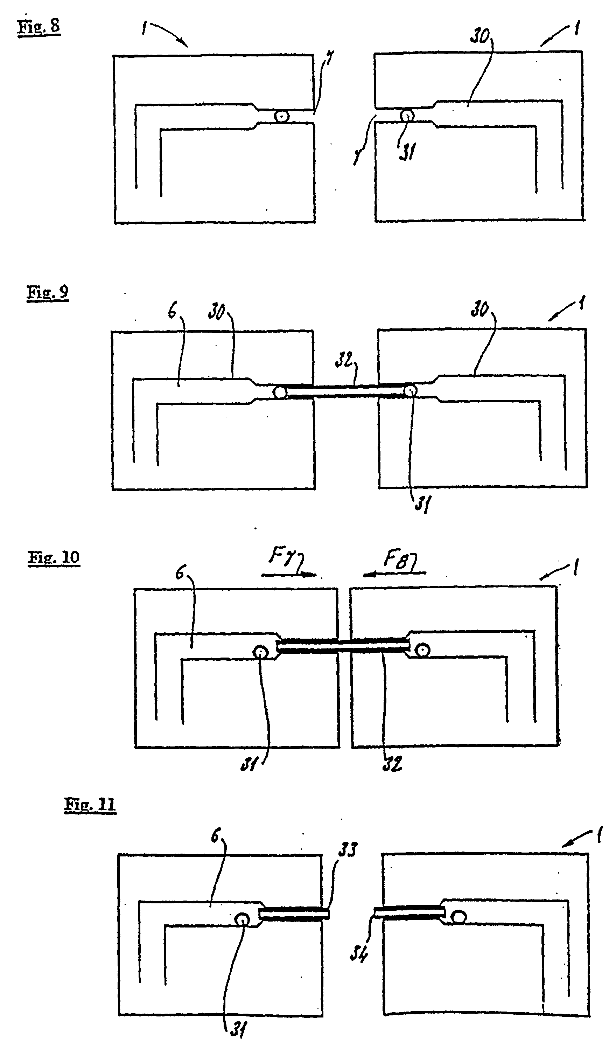

Selon la figure 8, on comprend que les deux billes 31 vont empêcher la sortie du fluide 6, présent dans une des cartes, qui est destiné à transiter dans l'autre carte 1.

Pour permettre le transfert de l'échantillon 6, il est nécessaire d'utiliser un tube 32 qui va pousser chaque bille 31 en dehors du canal 30 de petit diamètre et évacuer chaque bille 31 au niveau du grand diamètre. Dans cette position représentée à la figure 10, les deux cartes 1 sont rapprochées selon F7 et F8 et le fluide 6 peut transiter entre les deux cartes 1. Dans ce cas, l'ouverture d'entrée 7 de l'une des deux cartes 1 fait office d'ouverture de sortie 7. Si l'on veut cesser le transit du fluide, il est nécessaire, comme représenté à la figure 11, d'utiliser, par exemple, un moyen de chauffage pour couper le tube 32 et créer ainsi deux demi tubes 33, qui sont chacun isolés de l'extérieur par un scellement 34 dû au chauffage du tube 32 et à sa fonte. Pour ce faire, il est nécessaire d'utiliser un tube 32 en une matière qu'il est possible de couper et fondre avec une simple source de chaleur.

On pourrait fermer les demi tubes 33 par un bouchon ou tout autre moyen.

Bien entendu, pour chaque carte 1, il est possible de prévoir un certain nombre d'ouverture d'entrée 7 pour permettre des transits avec plusieurs autres cartes 1.

Pour comprendre la façon dont le remplissage d'une carte 1 ou le transit d'une carte 1 remplie vers une carte 1 vide s'effectue, il faut comprendre que le réseau de canaux 5 est à une pression qui est inférieure à la pression ambiante de sorte que lorsque le réseau de canaux 5 est mis en contact avec un échantillon 6 situé à la pression ambiante, le transit s'effectuera automatiquement au sein de ladite carte 1.

Néanmoins, tout moyen de transfert connu de l'homme du métier et adapté aux conditions particulières, ci-dessus exposées, peut être utilisé.

Selon un autre mode de réalisation, représenté à la figure 17, le transfert de liquide peut être le suivant. Une carte 1 comporte une vanne 18 en liaison directe avec une ouverture d'entrée 7. Cette vanne 18 à bille 21 pourrait être constituée par une vanne 8 avec élastomère. L'ouverture d'entrée 7 comporte un évidement en forme de tronc de cône. Il y aura donc un accouplement conique entre le tube cylindrique d'accouplement 32 et le cône d'étanchéité. Dans ce mode de réalisation, la manipulation des vannes 18 s'effectue latéralement par rapport à la carte 1.

Avantageusement, ledit tube 32 peut être préalablement inséré dans une des deux cartes 1.

### REFERENCES

1. Dispositif ou carte
2. Surface supérieure de la carte 1
3. Surface inférieure de la carte 1
4. Bord reliant les surfaces 2 et 3
5. Canal
6. Echantillon ou fluide
7. Ouverture d'entrée ou de sortie de la carte 1
8. Vanne incorporée à la carte 1
9. Premier moyen de la vanne 8 qui peut être déformé ou film flexible
10. Second moyen de la vanne 8 qui fait office d'actionneur
11. Ergot mobile du moyen 10
12. Surface biseautée de l'ergot 11
13. Epaulement de l'ergot 11
14. Piston du moyen 10
15. Surface biseautée du piston 14
16. Film transparent supérieur
17. Film transparent inférieur
18. Vanne incorporée à la carte 1
19. Premier moyen de la vanne 18 qui peut être déformé
20. Second moyen de la vanne 18 qui fait office d'actionneur
21. Bille située dans le canal 5
22. Dégagement du canal 5 où est présent la bille 21
23. Corps de la carte 1
24. Moyen de fixation des premier et second moyens 9 et 10 sur le corps 23
25. Trous traversants constituant les canaux 5
26. Rainures constituant les canaux 5
27. Languette de l'ergot 11
28. Troisième moyen de la vanne 18 qui peut être déformé
29. Quatrième moyen de la vanne 18 qui fait office d'actionneur
30. Canal de transfert associé à l'ouverture 7
31. Bille du canal 30
32. Tube pour relier deux canaux 30
33. Demi tube
34. Scellement
35. Cône d'étanchéité de l'ouverture d'entrée 7
36. Rainure semi-circulaire
38. Vanne incorporée à la carte 1
39. Premier moyen de la vanne 38 qui peut être déformé ou film flexible
40. Second moyen de la vanne 38 qui fait office d'actionneur ou agrafe
41. Ergot d'actionnement de l'agrafe 40
42. Premier bras de l'agrafe 40
43. Second bras de l'agrafe 40
44. Piston de l'agrafe 40
45. Bras de liaison entre les premier et second bras 42 et 43
46. Bossage d'appui du second bras 43
47. Siège de la vanne 38
F2. Flux fluidique lorsque le moyen 9 est déformée et le transfert est impossible
F3. Enfoncement du piston 14 du second moyen 10
F4. Basculement de l'ergot 11 du moyen 10 sous l'action F3
F5. Enfoncement
F6. Enfoncement inverse à F5
F7 et F8. Rapprochement de deux cartes 1
F9. Coulissement de l'agrafe 40 permettant l'ouverture de la vanne 38
F10. Coulissement de l'agrafe 40 permettant la fermeture de la vanne 38
F11. Flux fluidique lorsque le moyen 39 est au repos et le transfert est possible
F12. Flux fluidique lorsque le moyen 39 est déformée et le transfert est impossible P. Pas entre deux agrafes 40 adjacentes

## Revendications

1. Dispositif (1), permettant de conduire une réaction ou au moins deux réactions en parallèle ou en série en son sein, qui est constitué par :
- une surface supérieure (2) et une surface inférieure (3) reliées l'une à l'autre par un bord (4),
- au moins un canal (5) dans lequel un flux fluidique (F1 ou F2) peut être créé par des moyens de transfert pour permettre le transfert d'au moins un échantillon (6) à traiter et/ou à analyser, et
- au moins une vanne (8, 18 ou 38) incorporée à chaque canal (5) permettant l'orientation de chaque échantillon (6) et donc le contrôle des transferts, des réactions et des analyses dans le dispositif (1),
chaque vanne (8, 18 ou 38) est constituée de deux moyens (9, 19 ou 39 et 10, 20 ou 40) solidaires du dispositif (1), le premier moyen (9, 19 ou 39) étant mobile entre une position de repos où le transfert de fluide (6) est possible et une position active où ledit transfert est impossible, et le second moyen (10, 20 ou 40) étant mobile entre une position de repos où il (10, 20 ou 40) n'est pas en contact avec ledit premier moyen (9, 19 ou 39) et une position active où il déforme le premier moyen (9, 19 ou 39), pour que le transfert (6) soit impossible, ledit second moyen (10, 20 ou 40) est activé par un actionneur extérieur au dispositif (1), qui agit ponctuellement et uniquement lors du déplacement du second moyen (10, 20 ou 40) de sa position de repos vers sa position active et inversement.

2. Dispositif, selon la revendication 1, **caractérisé par le fait que** les premier et second moyens (9, 19 ou 39 et 10, 20 ou 40) sont positionnés au niveau d'une des surfaces (2 ou 3) du dispositif (1) où le canal (5) concerné est affleurant.

3. Dispositif, selon l'une quelconque des revendications 1 ou 2, **caractérisé par le fait que** les premier et second moyens (9, 19 ou 39 et 10, 20 ou 40) sont positionnés dans le prolongement longitudinal de l'orifice de la partie du canal (5) situé en amont ou en aval de la vanne (8, 18 ou 38).

4. Dispositif, selon l'une quelconque des revendications 1 à 3, **caractérisé par le fait que** le second moyen (10, 20 ou 40) est mobile entre deux positions, une première position de repos où le transfert d'un fluide (6) est possible, et une seconde position déformée et stable où il vient compresser le premier (9, 19 ou 39) au niveau du canal (5) afin de le fermer.

5. Dispositif, selon l'une quelconque des revendications 1 à 4, **caractérisé par le fait que** le premier moyen (9, 19 ou 39) est constitué par un film flexible (9, 19 ou 39), tel que de l'élastomère, recouvrant en tout ou partie la surface supérieure (2) ou la surface inférieure (3) du dispositif (1).

6. Dispositif, selon l'une quelconque des revendications 1 à 4, **caractérisé par le fait que** le premier moyen (19), qui peut entraîner la fermeture indirectement du canal (5), est associé à une bille (21) située dans le canal (5).

7. Dispositif, selon l'une quelconque des revendications 1 à 5, **caractérisé par le fait que** le second moyen (10) est constitué par un ergot mobile (11) et un piston (15) pour appuyer sur le premier moyen (9) et par une surface biseautée (12) associée à un épaulement (13) pour maintenir en position déformée l'ergot mobile (11).

8. Dispositif, selon l'une quelconque des revendications 1 à 7, **caractérisé par le fait que** le second moyen (10) est monobloc et actionnable de l'extérieur du dispositif (1).

9. Dispositif, selon la revendication 6, **caractérisé par le fait que** la bille (21) est maintenue en position dans le canal (5) par l'intermédiaire d'un dégagement (22) situé dans le prolongement longitudinal de l'orifice de la partie dudit canal (5) situé en amont ou en aval de la vanne (18).

10. Dispositif selon l'une quelconque des revendications 6 ou 9, **caractérisé par le fait que** la bille (21) a un diamètre sensiblement identique mais inférieur au diamètre intérieur du canal (5), de sorte que ladite bille (21) se coince dans ledit canal (5) lorsque le premier moyen (19) est dans la seconde position déformée, où le transfert du fluide (6) est impossible.

11. Dispositif, selon l'une quelconque des revendications 1 à 4, **caractérisé par le fait que** le second moyen (40) est constitué par deux bras (42 et 43) reliés l'un à l'autre par un bras de liaison (45) qui créent une agrafe (40) en forme sensiblement de U dont la gorge reçoit la carte (1).

12. Dispositif, selon la revendication 11, **caractérisé par le fait que** l'agrafe (40) comporte un moyen d'actionnement (41) de ladite agrafe (40).

13. Dispositif, selon l'une quelconque des revendications 11 ou 12, **caractérisé par le fait que** l'agrafe (40), mobile de manière réversible entre deux positions, une première position de repos où le transfert d'un fluide (6) est possible, et une seconde position déformée et stable où il vient compresser le premier moyen (39) au niveau du canal (5) afin de le fermer, coopère avec des moyens de positionnement (47 et 36) dans ses deux positions extrêmes.

14. Dispositif, selon l'une quelconque des revendications 1 à 13, **caractérisé par le fait que** le réseau de canaux (5) est en dépression par rapport à l'environnement où est placé le dispositif, ce qui permet le transfert, au sein du réseau (5), d'au moins un échantillon (6) à traiter et/ou à analyser par une ouverture d'entrée (7) du dispositif (1), et que chaque vanne (8, 18 ou 38) incorporée audit dispositif (1) permettant l'orientation de chaque échantillon (6) transféré et donc le contrôle des réactions dans le dispositif.

15. Dispositif, selon l'une quelconque des revendications 1 à 14, qui comporte au moins trois vannes (8, 18 et/ou 38), **caractérisé par le fait que** la distance séparant deux vannes (8, 18 et/ou 38) adjacentes est constante et préférentiellement comprise entre 1 et 5 mm.

16. Système de transfert d'un flux fluidique (6) entre deux dispositifs (1), chaque dispositif (1) selon l'une quelconque des revendications 1 à 15, **caractérisé par le fait qu'**il est constitué par :
- un canal de transfert (30) pour chaque dispositif (1) constitué de deux portions une première portion de grand diamètre, qui n'est pas en contact avec l'extérieur dudit dispositif (1) et une seconde portion de petit diamètre, qui est en contact avec l'extérieur,
- une bille (31) située dans la portion de petit diamètre de chaque canal de transfert (30), et
- un tube (32) pouvant relier les portions de petit diamètre de deux dispositifs (1).

17. Système de transfert d'un flux fluidique (6) entre deux dispositifs (1), chaque dispositif (1) selon l'une quelconque des revendications 1 à 16, **caractérisé par le fait qu'**il est constitué par :
- un canal de traversant (25) pour chaque dispositif (1) constitué de deux portions une première portion de grand diamètre, qui n'est pas en contact avec le canal (5) en contact avec l'ouverture de sortie (7) et donc avec l'extérieur dudit dispositif (1) et une seconde portion de petit diamètre, qui est en contact avec ladite ouverture (7) et donc avec l'extérieur,
- une bille (21) située dans la portion de petit diamètre de chaque canal traversant (25), et
- un tube (32) pouvant relier les portions de petit diamètre de deux dispositifs (1).

18. Système, selon l'une quelconque des revendications 16 ou 17, **caractérisé par le fait que** le petit diamètre de chaque canal de transfert (30) ou traversant (25) est sensiblement identique ou inférieur au diamètre de chaque bille (31 ou 21) et au diamètre extérieur du tube (32), afin de créer une étanchéité avec l'extérieur de chaque dispositif (1) individuel ou de deux dispositifs (1) associés par le système de transfert.

19. Procédé de transfert d'un flux fluidique (6) entre deux dispositifs (1), selon l'une quelconque des revendications 1 à 15, utilisant un système selon l'une quelconque des revendications 16 à 18, **caractérisé en ce qu'**il consiste à :
- positionner chaque extrémité libre du tube (32) au niveau de la seconde portion de petit diamètre du canal de transfert à l'encontre de la bille (31) de chaque dispositif,
- rapprocher les deux dispositifs (1) selon l'axe dudit tube (32), de sorte que le tube (32) déplace chaque bille (31 ou 21) de la seconde portion de petit diamètre dudit canal de transfert (30) ou traversant (25) vers la première portion de grand diamètre du canal (30).

## Claims

1. Device (1) making it possible to conduct a reaction or at least two reactions in parallel or in series within it, and which consists of:
- an upper surface (2) and a lower surface (3) which are connected by an edge (4),
- at least one duct (5) in which a fluid flow (F1 or F2) can be created by transfer means to allow at least one sample (6) for treatment and/or analysis to be transferred, and
- at least one valve (8, 18 or 38) incorporated into each duct (5) allowing each sample (6) to be oriented and thus allowing control over the transfers, reactions and analyses in the device (1),
each valve (8, 18 or 38) consists of two means (9, 19 or 39 and 10, 20 or 40) secured to the device (1), the first means (9, 19 or 39) being able to move between a position of rest in which transfer of fluid (6) is possible and an active position in which the said transfer is impossible, and the second means (10, 20 or 40) being able to move between a position of rest in which it (10, 20 or 40) is not in contact with the said first means (9, 19 or 39) and an active position in which it deforms the first means (9, 19 or 39) so that transfer (6) is impossible, the said second means (10, 20 or 40) is activated by an actuator external to the device (1), which acts in isolation and only when the second means (10, 20 or 40) is moved from its position of rest into its active position and vice versa.

2. Device according to Claim 1, **characterized in that** the first and second means (9, 19 or 39 and 10, 20 or 40) are positioned at one of the surfaces (2 or 3) of the device (1) with which the duct (5) in question is flush.

3. Device according to either of Claims 1 and 2, **characterized in that** the first and second means (9, 19 or 39 and 10, 20 or 40) are positioned in the longitudinal continuation of the orifice of that part of the duct (5) that lies upstream or downstream of the valve (8, 18 or 38).

4. Device according to any of Claims 1 to 3, **characterized in that** the second means (10, 20 or 40) can move between two positions, a first position of rest in which transfer of a fluid (6) is possible, and a second deformed and stable position in which it compresses the first (9, 19 or 39) at the duct (5) in order to close it.

5. Device according to any of Claims 1 to 4, **characterized in that** the first means (9, 19 or 39) consists of a flexible film (9, 19 or 39) made, for example, of elastomer, covering all or part of the upper surface (2) or the lower surface (3) of the device (1).

6. Device according to any of Claims 1 to 4, **characterized in that** the first means (19), which can indirectly cause the duct (5) to close, is associated with a ball (21) located in the duct (5).

7. Device according to any of Claims 1 to 5, **characterized in that** the second means (10) consists of a mobile lug (11) and a piston (15) for pressing on the first means (9), and of a bevelled surface (12) associated with a shoulder (13) for keeping the mobile lug (11) in the deformed position.

8. Device according to any of Claims 1 to 7, **characterized in that** the second means (10) is made as one piece and can be actuated from outside the device (1).

9. Device according to Claim 6, **characterized in that** the ball (21) is held in position in the duct (5) by means of a clearance (22) located in the longitudinal continuation of the orifice of the part of the said duct (5) situated upstream or downstream of the valve (18).

10. Device according to either of Claims 6 and 9, **characterized in that** the ball (21) has a diameter approximately identical to but smaller than the inside diameter of the duct (5), so that the said ball (21) becomes wedged in the said duct (5) when the first means (19) is in the deformed second position in which transfer of fluid (6) is impossible.

11. Device according to any of Claims 1 to 4, **characterized in that** the second means (40) consists of two arms (42 and 43) connected by a connecting arm (45) which create an approximately U-shaped clip (40) the groove of which U-shape holds the card (1).

12. Device according to Claim 11, **characterized in that** the clip (40) comprises a means (41) of actuating the said clip (40).

13. Device according to either of claims 11 and 12, **characterized in that** the clip (40), which can move reversibly between two positions, a first position of rest in which transfer of a fluid (6) is possible, and a deformed and stable second position in which it compresses the first means (39) at the duct (5) in order to close it, collaborates with means (47 and 36) of positioning in its two extreme positions.

14. Device according to any of Claims 1 to 13, **characterized in that** the network of ducts (5) is at a depression with respect to the environment in which the device is placed, which makes it possible, within the network (5), for at least one sample (6) for treatment and/or analysis to be transferred through an inlet opening (7) of the device (1), and **in that** each valve (8, 18 or 38) incorporated into the said device (1) allows each sample (6) transferred to be oriented and therefore allows control over the reactions in the device.

15. Device according to any of Claims 1 to 14, which comprises at least three valves (8, 18 and/or 38), **characterized in that** the distance separating two adjacent valves (8, 18 and/or 38) is constant and is preferably between 1 and 5 mm.

16. System for transferring a fluid flow (6) between two devices (1), each device (1) according to any of Claims 1 to 15, **characterized in that** it consists of:
- a transfer duct (30) for each device (1), consisting of two portions, a large-diameter first portion which is not in contact with the outside of the said device (1) and a small-diameter second portion which is in contact with the outside,
- a ball (31) located in the small-diameter portion of each transfer duct (30), and
- a tube (32) capable of connecting the small-diameter portions of two devices (1).

17. System for transferring a fluid flow (6) between two devices (1), each device (1) according to any of Claims 1 to 16, **characterized in that** it consists of:
- a through-duct (25) for each device (1), consisting of two portions, a large-diameter first portion which is not in contact with the duct (5) in contact with the outlet opening (7) and therefore with the outside of the said device (1), and a small-diameter second portion which is in contact with the said opening (7) and therefore with the outside,
- a ball (21) located in the small-diameter portion of each through-duct (25), and
- a tube (32) capable of connecting the small-diameter portions of two devices (1).

18. System according to either of Claims 16 and 17, **characterized in that** the small diameter of each transfer duct (30) or through-duct (25) is approximately identical to or smaller than the diameter of each ball (31 or 21) and the outside diameter of the tube (32) so as to seal against the outside each individual device (1) or pair of devices (1) associated using the transfer system.

19. Method for transferring a fluid flow (6) between two devices (1) according to any of Claims 1 to 15, using a system according to any of Claims 17 to 18, **characterized in that** it consists in:
- positioning each free end of the tube (32) at the small-diameter second portion of the transfer duct, against the ball (31) of each device,
- bringing the two devices (1) closer together along the axis of the said tube (32) so that the tube (32) moves each ball (31 or 21) from the small-diameter second portion of the said transfer duct (30) or through-duct (25) toward the large-diameter first portion of the duct (30).

## Patentansprüche

1. Vorrichtung (1), die es ermöglicht, eine Reaktion oder zumindest zwei Reaktionen parallel oder in Serie in ihrem Inneren durchzuführen, wobei diese folgendes aufweist, nämlich:
- eine obere Fläche (2) und eine untere Fläche (3), die über einen Rand (4) untereinander verbunden sind;
- zumindest einen Kanal (5), in dem durch Überbringungsmittel ein Fluidfluß (F1 oder F2) erzeugt werden kann, um die Überbringung von zumindest einer zu behandelnden und/oder zu analysierenden Probe (6) zu ermöglichen, und
- zumindest ein Ventil (8, 18 oder 38), das in jedem Kanal (5) inkorporiert ist, wodurch die räumliche Anordnung jeder Probe (6) und folglich die Steuerung der Überbringung, der Reaktionen und der Analysen in der Vorrichtung (1) möglich ist,
wobei jedes Ventil (8, 18 oder 38) durch zwei mit der Vorrichtung (1) verbundene Mittel (9, 19 oder 39 und 10, 20 oder 40) gebildet ist, wobei das erste Mittel (9, 19 oder 39) zwischen einer Ruheposition, in der die Überbringung des Fluids (6) möglich ist, und einer aktiven Position, in der die Überbringung nicht möglich ist, beweglich ist, und das zweite Mittel (10, 20 oder 40) zwischen einer Ruheposition, in der es sich nicht in Berührung mit dem ersten Mittel (9, 19 oder 39) befindet, und einer aktiven Position beweglich ist, in der es das erste Mittel (9, 19 oder 39) deformiert, damit die Überbringung (6) nicht möglich wird, wobei das zweite Mittel (10, 20 oder 40) durch ein externes Betätigungsmittel der Vorrichtung (1) aktiviert wird, das punktuell und einzig dazu wirkt, um das zweite Mittel (10, 20 oder 40) aus seiner Ruheposition in seine aktive Position und umgekehrt zu bewegen.

2. Vorrichtung nach Anspruch 1, **dadurch gekennzeichnet, daß** das erste und das zweite Mittel (9, 19 oder 39 und 10, 20 oder 40) im Bereich einer der Flächen (2 oder 3) der Vorrichtung (1) angeordnet sind, bei der der Kanal (5) liegt.

3. Vorrichtung nach Anspruch 1 oder 2, **dadurch gekennzeichnet, daß** die ersten und die zweiten Mittel (9, 19 oder 39 und 10, 20 oder 40) sich in der längs erstreckenden Verlängerung der Öffnung des Teiles des Kanals (5) angeordnet sind, welcher stromaufwärts oder stromabwärts des Ventils (8, 18 oder 38) liegt.

4. Vorrichtung nach einem der Ansprüche 1 bis 3, **dadurch gekennzeichnet, daß** das zweite Mittel (10, 20 oder 40) zwischen zwei Positionen beweglich ist, einer ersten Ruheposition, in der die Überbringung eines Fluids (6) möglich ist, und einer zweiten verformten und stabilen Position, in der es das erste Mittel (9, 19 oder 39) im Bereich des Kanals (5) zusammendrückt, um diesen zu verschließen.

5. Vorrichtung nach einem der Ansprüche 1 bis 4, **dadurch gekennzeichnet, daß** das erste Mittel (9, 19 oder 39) aus einer flexiblen Folie (9, 19 oder 39), wie bspw. einem Elastomer, gebildet ist, die ganz oder teilweise die obere Fläche (2) oder die untere Fläche (3) der Vorrichtung (1) bedeckt.

6. Vorrichtung nach einem der Ansprüche 1 bis 4, **dadurch gekennzeichnet, daß** das erste Mittel (19), das das indirekte Verschließen des Kanals (5) nach sich ziehen kann, einer Kugel (21) zugehörig ist, die in dem Kanal (5) angeordnet ist.

7. Vorrichtung nach einem der Ansprüche 1 bis 5, **dadurch gekennzeichnet, daß** das zweite Mittel (10) durch eine bewegliche Nase (11) und einen Stempel (15) zum Drücken auf das erste Mittel (9) und durch eine schräge Fläche (12) gebildet ist, die einer Schulter (13) zugehörig ist, um die bewegliche Nase (11) in der verformten Position zu halten.

8. Vorrichtung nach einem der Ansprüche 1 bis 7, **dadurch gekennzeichnet, daß** die zweiten Mittel (10) einstückig ausgebildet sind, und von der Außenseite der Vorrichtung (1) bedienbar sind.

9. Vorrichtung nach Anspruch 6, **dadurch gekennzeichnet, daß** die Kugel (21) mittels eines Freiraumes (22) in dem Kanal (5) in Position gehalten wird, welcher stromabwärts oder stromaufwärts des Ventiles (18) in einer sich längserstreckenden Verlängerung der Öffnung eines Teiles des Kanals (5) angeordnet ist.

10. Vorrichtung nach einem der Ansprüche 6 oder 9, **dadurch gekennzeichnet, daß** die Kugel (21) einen Durchmesser aufweist, der etwa gleich, jedoch kleiner als der Innendurchmesser des Kanals (5) ist, so daß sich die Kugel (21) in dem Kanal (5) verklemmt, wenn das erste Mittel (19) sich in der zweiten deformierten Position befindet, in der die Überbringung des Fluids (6) nicht möglich ist.

11. Vorrichtung nach einem der Ansprüche 1 bis 4, **dadurch gekennzeichnet, daß** das zweite Mittel (40) durch zwei Arme (42) und (43) gebildet wird, die über einen Verbindungsarm (45) miteinander verbunden sind, wodurch eine Klammer (40) wesentlich in Form eines U gebildet wird, in deren Vertiefung die Karte (1) aufgenommen ist.

12. Vorrichtung nach Anspruch 11, **dadurch gekennzeichnet, daß** die Klammer (40) ein Betätigungsmittel (41) für die Klammer (40) aufweist.

13. Vorrichtung nach Anspruch 11 oder 12, **dadurch gekennzeichnet, daß** die Klammer (40), die reversibel zwischen zwei Positionen beweglich ist, nämlich einer ersten Ruheposition, in der die Überbringung eines Fluids (6) möglich ist, und einer zweiten verformten und stabilen Position, in der diese das erste Mittel (39) im Bereich des Kanals (5) zusammendrückt, um diesen zu schließen, mit Positioniermittel (47 und 36) in seinen beiden Extrempositionen zusammenwirkt.

14. Vorrichtung nach einem der Ansprüche 1 bis 13, **dadurch gekennzeichnet, daß** sich das Netz an Kanälen (5) bezüglich der Umgebung, in der die Vorrichtung angeordnet ist, im Unterdruck befindet, wodurch es möglich ist, im Inneren des Netzes (5) zumindest eine zu behandelnde und/oder zu analysierende Probe (6) durch eine Eintrittsöffnung (7) der Vorrichtung zu überbringen, und daß jedes Ventil (8, 18 oder 38), das in der Vorrichtung (1) inkorporiert ist, eine räumliche Anordnung jeder überbrachten Probe (6) und demzufolge die Steuerung der Reaktionen in der Vorrichtung ermöglicht.

15. Vorrichtung nach einem der Ansprüche 1 bis 14, die zumindest drei Ventile (8, 18 und/oder 38) aufweist, **dadurch gekennzeichnet, daß** der Abstand, der zwei benachbarten Ventile (8, 18 und/oder 38) voneinander trennt, konstant ist und vorzugsweise zwischen 1 und 5 mm liegt.

16. System zum Überbringen eines fluiden Stromes (6) zwischen zwei Vorrichtungen (1), wobei jede Vorrichtung entsprechend einem der Ansprüche 1 bis 15 ausgebildet ist, **dadurch gekennzeichnet, daß** es folgendes aufweist, nämlich:
- einen Überbringungskanal (30) für jede Vorrichtung (1), der aus zwei Abschnitten gebildet ist, einem ersten Abschnitt mit großem Durchmesser, der nicht in Kontakt mit der Außenseite der Vorrichtung (1) steht, und einem zweiten Abschnitt kleinen Durchmessers, der in Kontakt mit der Außenseite steht,
- eine Kugel (31), die in dem Abschnitt mit kleinem Durchmesser jeden Überbringungskanals (30) angeordnet ist, und
- ein Rohr (32), das die Abschnitte mit kleinem Durchmesser der beiden vorrichtungen (1) verbinden kann.

17. System zum Überbringen eines fluiden Stromes (6) zwischen zwei Vorrichtungen (1), wobei jede Vorrichtung (1) entsprechend einem der Ansprüche 1 bis 16 ausgebildet ist, **dadurch gekennzeichnet, daß** es folgendes aufweist, nämlich:
- einen Überführungskanal (25) für jede Vorrichtung (1), -der durch zwei Abschnitte gebildet ist, einem ersten Abschnitt mit großem Durchmesser, der sich nicht in Kontakt mit dem Kanal (5) befindet, der mit der Austrittsöffnung (7) in Kontakt steht, und demzufolge mit der Außenseite der Vorrichtung (1) und einem zweiten Abschnitt mit kleinem Durchmesser, der in Kontakt mit der genannten Öffnung (7) steht, und demzufolge mit der Außenseite;
- eine Kugel (21), die in dem Abschnitt mit kleinem Durchmesser jedes Überführungskanals (25) angeordnet ist, und
- ein Rohr (32), das die Abschnitte mit kleinem Durchmesser der beiden Vorrichtungen (1) verbinden kann.

18. system nach einem der Ansprüche 16 oder 17, **dadurch gekennzeichnet, daß** der kleine Durchmesser jedes Überbringungskanals (30) oder Überführungskanals (25) etwa gleich oder kleiner dem Durchmesser jeder Kugel (31 oder 21) und dem Außendurchmesser des Rohres (32) ist, um eine Abdichtung zu der Außenseite jeder einzelnen Vorrichtung (1) oder der beiden Vorrichtungen (1), die durch das Überbringungssystem zusammengehörig sind, zu schaffen.

19. Verfahren zum Überbringen eines fluiden Stromes (6) zwischen zwei Vorrichtungen (1) nach einem der Ansprüche 1 bis 15, unter Verwendung eines Systems nach einem der Ansprüche 16 bis 18, **dadurch gekennzeichnet, daß** es folgendes aufweist, nämlich:
- Positionieren jedes freien Endes des Rohres (32) im Bereich des zweiten Abschnittes kleinen Durchmessers des Überbringungskanals entgegen der Kugel (31) jeder Vorrichtung,
- Annähern der beiden Vorrichtungen (1) längs der Achse des Rohres (32) derart, daß das Rohr (32) jede Kugel (31 oder 21) aus dem zweiten Abschnitt mit geringem. Durchmesser des Überbringungskanals (30) oder Überführungskanals (25) in den ersten Abschnitt mit großem Durchmesser des Kanals (30) verbringt.
